(19) Europäisches Patentamt
European Patent Office
Office européen des brevets

(11) Veröffentlichungsnummer: **0 325 739 A2**

# (12) EUROPÄISCHE PATENTANMELDUNG

(21) Anmeldenummer: **88120244.4**

(22) Anmeldetag: **05.12.88**

(51) Int. Cl.⁴: **C08G 73/16**

(30) Priorität: **28.01.88 DE 3802511**

(43) Veröffentlichungstag der Anmeldung:
**02.08.89 Patentblatt 89/31**

(84) Benannte Vertragsstaaten:
**AT BE CH DE FR GB IT LI NL**

(71) Anmelder: **HÜLS AKTIENGESELLSCHAFT**
**Patentabteilung / PB 15 - Postfach 13 20**
**D-4370 Marl 1(DE)**

(72) Erfinder: **Neugebauer, Wolfgang, Dr.**
**Karl-Leisner-Strasse 3**
**D-4408 Dülmen-Merfeld(DE)**
Erfinder: **Poll, Heinz-Günter, Dr.**
**Tucherweg 80**
**D-4010 Hilden(DE)**

## (54) Formmassen bestehend aus einem thermoplastisch verarbeitbaren, aromatischen Polyesterimid.

(57) Es sollen besser verarbeitbare Polyesterimide mit guten mechanischen Eigenschaften zur Verfügung gestellt werden.

Dies wurde erreicht durch Polyesterimide, enthaltend die Reste nachstehender Ausgangsmonomeren:

A. 10 - 70 Mol.-% HO-Ar-COOH
B. 0 - 44 Mol.-% HOOC-Ar′-COOH
C. 15 - 45 Mol.-% HO-Ar″-OH
D. 1 - 45 Mol.-% einer Verbindung der allgemeinen Formel

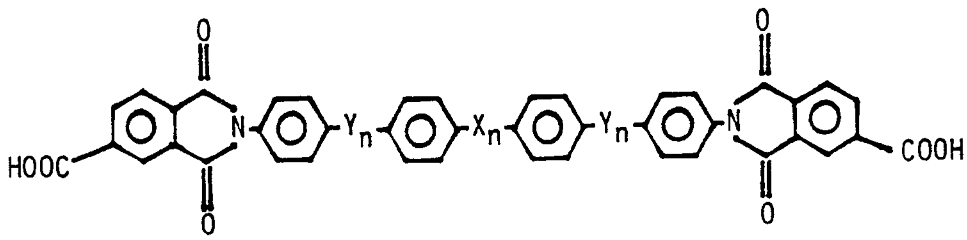

Mit Hilfe der Erfindung gelingt es, besser verarbeitbare Formmassen mit guten mechanischen Eigenschaften zur Verfügung zu stellen.

EP 0 325 739 A2

## Formmassen bestehend aus einem thermoplastisch verarbeitbaren, aromatischen Polyesterimid

Gegenstand der Erfindung sind Formmassen bestehend aus einem thermoplastisch verarbeitbaren, aromatischen Polyesterimid.

Flüssigkristalline Polyesterimide sind bereits bekannt. Sie können jedoch hinsichtlich u. a. ihrer Eigenfarbe und der geringen Kristallinität nicht befriedigen. So werden in DE-OS 29 50 939 Polyesterimide aus 4-(4′-Carboxyphthalimido)benzoesäure, 2,6-Naphthalindicarbonsäure und einem chlor- oder alkylsubstituierten Hydrochinon bzw. 4-(4′-Hydroxyphthalimido)phenol,2,6-Napthalindicarbonsäure und einer chlor- oder alkylsubstituierten Terephthalsäure beschrieben. Analog dazu wird in US 4 383 105 statt der Naphthalindicarbonsäure 6-Hydroxy-2-naphthalincarbonsäure eingesetzt. Die Monomeren sind schwer zugänglich, so daß die Polymeren vom technischen Standpunkt her uninteressant sind.

Polyesterimide, die Reste von $C_8$- bis $C_{16}$-Alkylen-alpha,omega-bis-trimellitsäureimiden (DE-OS 35 16 427) bzw. $C_2$- bis $C_{12}$-Alkylen-alpha,omega-bis-trimellitsäureimiden (EP-OS 0 213 362) enthalten, weisen nicht die gewünschte hohe thermische Beständigkeit auf.

Aus DE-OS 35 42 857 und in EP-OS 0 225 537 sind Polyesterimide bekannt, die sich von Bistrimellitsäureimiden einkerniger oder zweikerniger Diamine herleiten.

Aufgabe der Erfindung war es, aromatische, vorzugsweise in der Schmelze flüssigkristalline, Polyesterimide zur Verfügung zu stellen, die eine Kombination von gutem Schmelzfließverhalten, hervorragender Schlag- und Kerbschlagzähigkeit, hoher Steifigkeit und hoher Wärmeformbeständigkeit aufweisen.

Die Aufgabe wird durch Polyester gelöst, die Reste nachstehender Ausgangsmomoneren enthalten:

A. 10 - 70 Mol.-% HO-Ar-COOH
B. 0 - 44 Mol.-% HOOC-Ar′-COOH
C. 15 - 45 Mol.-% HO-Ar″-OH
D. 1 - 45 Mol.-% einer Verbindung der allgemeinen Formel

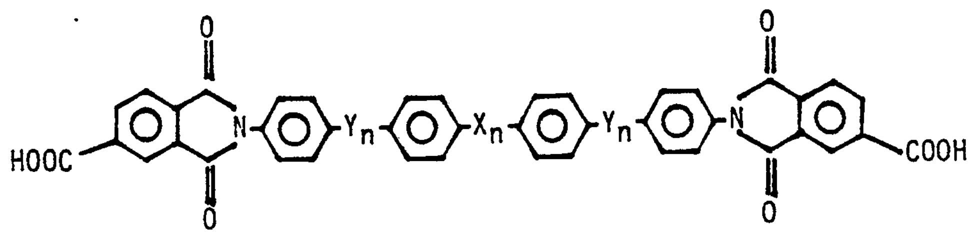

hierbei bedeutet
Ar, Ar′, Ar″: 1.3- oder 1.4-Phenylen; 1.4-, 1.5-, 2.6- oder 2.7-Naphthylen
oder

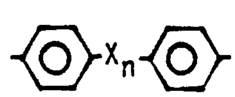,

Ar, Ar′ und Ar″ können gleich oder ungleich sein;
Y: -O-; -S-;
X: -O-; -S-; $-SO_2-$; $-CR_2-$; -CO-;
R: -H, $C_1$ - $C_4$-Alkyl;
n: 0 oder 1;
alle Mengenangaben beziehen sich auf die Summe von A. bis D., und sie müssen in der Summe 100 Mol.-% ergeben, wobei das molare Verhältnis (B. + D.) : C. im Bereich von 0,9 : 1 bis 1,1 : 1 liegt.

Als aromatische Hydroxycarbonsäuren (Komponente A.) kommen p-Hydroxybenzoesäure, m-Hydroxybenzoesäure, 1.4- oder 2.6-Hydroxynaphthoesäure infrage.

Als aromatische Dicarbonsäuren (Komponente B.) werden Isophthalsäure, Terephthalsäure, 1.4-, 1.5-, 2.6-, 2.7-Naphthalindicarbonsäure, 4.4′-Diphenyletherdicarbonsäure oder 4.4′-Benzophenondicarbonsäure oder Gemische davon eingesetzt.

Als aromatische Dihydroxyverbindungen (Komponente C.) werden folgende Verbindungen eingesetzt: Hydrochinon, Resorcin, 1.3-, 1.4-, 1.5-, 2.6-, 2.7-Dihydroxynaphthalin, 4.4′-Dihydroxybiphenyl, 4.4′-Dihydroxydiphenylether, 4.4′-Dihydroxydiphenylsulfon; 4,4′-Dihydroxydiphenylsulfid; 4,4′-Dihydroxybenzophenon; Bisphenol A oder Gemische davon.

Verbindungen der allgemeinen Formel

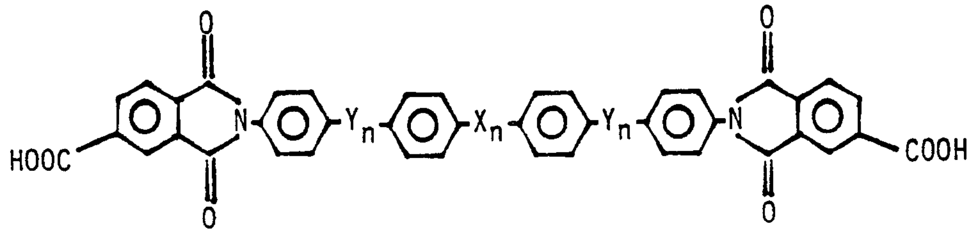

(Komponente D.) sind Bistrimellitsäureimide. Der Imidanteil wird durch Diamine, wie z. B. 4,4′-Bis(p-aminophenoxy)benzophenon, 4,4′-Bis(p-aminophenylmercapto)benzophenon, 4,4′-Bis(p-aminophenoxy)-diphenylsulfon, 4,4′-Bis(p-aminophenylmercapto)diphenylsulfon, 4,4′-Bis(p-aminophenoxy)biphenyl, 4,4′-Bis-(p-aminophenoxy)-2,2-diphenylpropan, gebildet.

Bevorzugt eingesetzt werden p-Hydroxybenzoesäure; Iso- und/oder Terephthalsäure; Hydrochinon, 4.4′-Dihydroxybiphenyl; Bistrimellitsäureimid mit 4.4′-Bis-(4-aminophenoxy)diphenylsulfon als Diaminanteil.

Die Komponente A. wird bevorzugt eingesetzt in Mengen von 20 bis 60 Mol.-%, die Komponente B. in Mengen von 10 bis 38 Mol-%, die Komponente C. in Mengen von 20 bis 40 Mol-% und die Komponente D. in Mengen von 2 bis 20 Mol-%. Das molare Verhältnis von (B. + D.) : C. bewegt sich im Bereich von 0,9 : 1 bis 1,1 : 1, bevorzugt 0,97 : 1 bis 1,04 : 1.

Die Mengenangaben der Einzelkomponenten beziehen sich auf die Summe der Komponenten A. bis D. Hierbei müssen sie in der Summe 100 Mol.-% ergeben.

Zur Herstellung dieser Polyesterimide kann jede für aromatische Polyester gebräuchliche Polymerisationsmethode benutzt werden (z. B. US-PS 4 093 595, DE-OS 20 25 971, EP-OS 0 050 821 und US-PS 4 184 996). Hierbei können die eingesetzten Monomeren mit ihren freien Endgruppen vorliegen oder auch als Derivate davon, z. B. mit einer Ester-, Säurechlorid- oder Acyloxy-Gruppe. Die Umsetzung der Monomeren kann in Schmelze erfolgen, es kann aber auch in Gegenwart eines inerten Wärmeüberträgers gearbeitet werden, wobei das Produkt als Aufschlämmung anfällt. Im allgemeinen werden die Komponenten A. und C. als Acetate bzw. Bisacetate und die Komponenten B. und D. als freie Dicarbonsäuren eingesetzt. Beim Einsatz der freien Bisphenole bzw. Hydroxycarbonsäuren können die Acetate bzw. Bisacetate durch Vorreaktion mit Acetanhydrid in situ hergestellt werden.

Die Polykondensationsgeschwindigkeit läßt sich durch Zugabe eines üblichen Veresterungskatalysators (z. B. Alkali-, Erdalkali-, Zinkacetat; Germaniumdioxid, Dialkylzinnoxid, p-Toluolsulfonsäure) erhöhen. Die Menge an Katalysator beträgt etwa 0,001 bis 1 Gew.-%, vorzugsweise zwischen 0,01 und 0,2 Gew.-%, bezogen auf die Summe der Monomeren.

Das Molekulargewicht eines zunächst hergestellten Polyesterimids kann gegebenenfalls zusätzlich durch eine Festphasennachkondensation weiter erhöht werden, wobei das zerkleinerte Polymere mehrere Stunden in einer inerten Atmosphäre (z. B. Stickstoff oder Vakuum) bei Temperaturen zwischen 160 und 320 °C gehalten wird.

Die erfindungsgemäßen Polyesterimide besitzen eine Glasübergangstemperatur $T_g$ von mehr als 140 °C, vorzugsweise zwischen 150 und 210 °C, und gegebenenfalls einen Kristallitschmelzpunkt $T_m$ von maximal 360 °C. Besonderes Interesse besitzen diejenigen Polyesterimide, die oberhalb von $T_m$ (bei amorphen Polyesterimiden oberhalb von $T_g$) eine flüssigkristalline Schmelze bilden. Die Lösungsviskosität sollte mindestens 0,5 dl/g betragen.

Die Polyesterimide können auf üblichen Maschinen durch Spritzguß oder Extrusion zu den erfindungsgemäßen Formmassen verarbeitet werden.

Die Formmassen können Füllstoffe, wie Talkum, oder Verstärkungsmittel, wie Glas-, ARAMID$^R$- oder Kohlefasern, sowie andere übliche Zusätze, wie z. B. Pigmente oder Stabilisatoren, enthalten.

Die Formmassen können nach üblichen Verfahren wie Spritzguß, Extrusion o. ä. zu Formteilen, Fasern, Folien usw. verarbeitet werden. Ebenso ist die Verwendung als Beschichtungsmittel ausgehend vom Pulver (z. B. Wirbelsinterverfahren), einer flüssigen Dispersion oder einer Lösung möglich.

Die aus den erfindungsgemäßen Formmassen hergestellten Formteile zeichnen sich durch eine niedrige Schmelzeviskosität unter Verarbeitungsbedingungen, eine hervorragende Schlag- und Kerbschlagzähigkeit,

eine hohe Steifigkeit und hohe Wärmeformbeständigkeit aus. Sie sind flammwidrig und äußerst chemikalienresistent.

Die in der Beschreibung und den Beispielen genannten Parameter wurden mit Hilfe nachstehender Verfahren bestimmt.

Die reduzierte Viskosität ($eta_{red}$) wird an einer Lösung des Polymeren (5 g/l) in Phenol/o-Dichlorbenzol 50/50 Gew.-Teile bei 25 °C analog DIN 53 728 bestimmt.

Der Glaspunkt ($T_g$) und der Schmelzpunkt ($T_m$) werden mit Hilfe von DSC bei einer Aufheizrate von 10 °C/min bestimmt.

Die polarisationsmikroskopische Untersuchung auf flüssigkristallinen Charakter wird auf einem Leitz-Orthoplan-Pol-Mikroskop mit 13-facher Objektvergrößerung in Verbindung mit einem Mettler-Heiztisch FP 52 durchgeführt, der auf einen Betrieb bis 385 °C umgerüstet wurde. Die Ausbildung einer Schlierentextur bei gekreuzten Polarisatoren zeigt hierbei flüssigkristallines Verhalten an.

## Beispiele

### Beispiel 1

28,11 g (8,33 Mol-%) der Verbindung

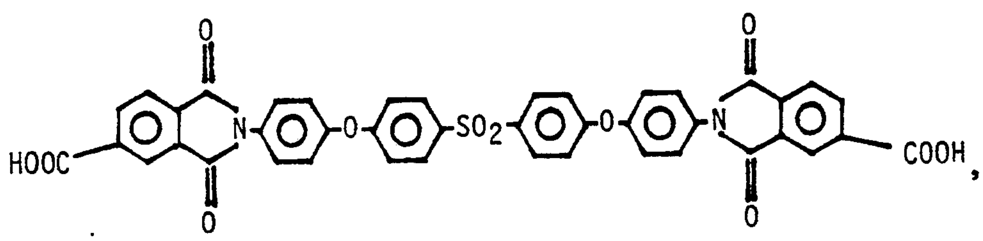

17,94 g Isophthalsäure (25,00 Mol-%), 16,02 g Hydrochinon (33,33 Mol-%), 19,89 g p-Hydroxybenzoesäure (33,33 Mol-%), 99 mg Natriumacetat und 55 ml Acetanhydrid werden zunächst 2 h bei 130 °C umgesetzt, anschließend wird unter Abdestillieren des überschüssigen Acetanhydrids und der gebildeten Essigsäure je 30 min bei 260 °C, 280 °C, 300 °C und 320 °C gerührt. Die Schmelze dieses Vorkondensats wird entnommen, nach Abkühlen gemahlen und bei 2 mbar nachkondensiert (je 30 min bei 180 °C, 200 °C und 250 °C, dann 3 h bei 280 °C und 4 h bei 300 °C). Es ergibt sich eine Glastemperatur $T_g$ von 191 °C und ein Kristallitschmelzpunkt $T_m$ von 321 °C. Das Polymere ist im Bereich oberhalb von $T_m$ bis zur Meßgrenze (385 °C) flüssigkristallin.
$eta_{red}$: 0,93 dl/g.

### Beispiel 2

27,32 g (6,25 Mol-%) der Verbindung

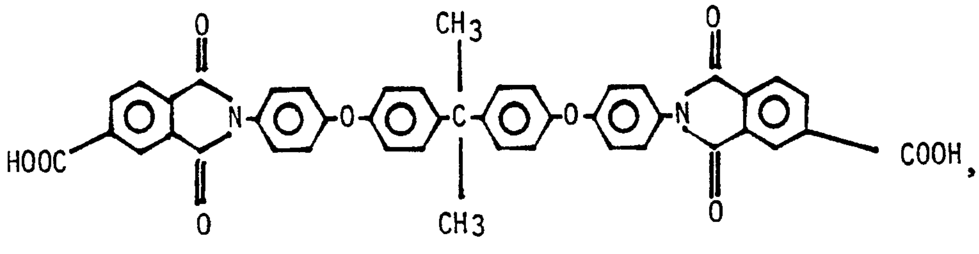

17,94 g Isophthalsäure (18,75 Mol-%), 9,73 g 4,4′-Diacetoxybiphenyl (6,25 Mol-%), 21,32 g Hydrochinondiacetat (18,75 Mol-%), 51,90 g p-Acetoxybenzoesäure (50,00 Mol-%) und 128 mg Natriumacetat werden unter Abdestillieren der gebildeten Essigsäure je 30 min bei 260 °C und 280 °C sowie 1 h bei 300 °C gerührt.

Anschließend wird innerhalb von 30 min der Druck auf 20 mbar erniedrigt und gleichzeitig auf 320 °C hochgeheizt. Es entsteht eine viskose, fadenbildende Schmelze. Das Polymere besitzt eine Glasübergangstemperatur $T_g$ von 186 °C; die polarisationsmikroskopische Untersuchung ergibt flüssigkristallines Verhalten bis zur Meßgrenze (385 °C).
$eta_{red}$: 1,07 dl/g.

Beispiel 3

937,0 g (4,17 Mol-%) der Verbindung

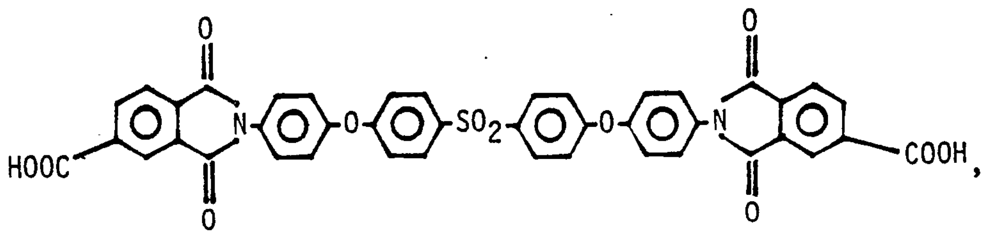

997,0 g Isophthalsäure (20,83 Mol-%), 1417 g Hydrochinondiacetat (25,00 Mol-%), 2594 g p-Acetoxybenzoesäure (50,00 Mol-%) und 1,476 g Natriumacetat werden unter Abdestillieren der entstehenden Essigsäure je 45 min bei 260 und 270 °C gerührt, dann innerhalb von 30 min auf 320 °C und anschließend innerhalb von 15 min auf 330 °C aufgeheizt. Nach Ausfahren des Produktes wird auf Granulatgröße zerkleinert und bei ca. 2 bis 5 mbar 16 h bei 200 °C, 9 h bei 250 °C und 7 1/2 h bei 300 °C in fester Phase nachkondensiert. Das Produkt ($T_g$ = 162 °C; $T_m$ = 355 °C) wird bei einer eingestellten Temperatur von 360 °C, einer Massetemperatur von 376 °C und einer Formtemperatur von 150 °C zu Prüfkörpern verspritzt. Folgende Eigenschaften werden ermittelt:
Kerbschlagzähigkeit (DIN 53 453); 23 °C: 8/8 angebrochen (31 kJ/$m^2$)
Schlagzähigkeit (DIN 53 453); 23 °C: 8/9 angebrochen (45 kJ/$m^2$)
Zugversuch nach DIN 53 455:
$delta_r$ 116 N/$mm^2$
$epsilon_r$ 1,1 %
Zug-E-Modul (DIN 53 457): 12 070 N/$mm^2$
Vicat A/50 (DIN 53 460): 210 °C
Vicat B/50 (DIN 53 460): 160 °C
Brandverhalten (UL 94): V-O (Gesamtbrenndauer 2 sec)
$eta_{red}$: 0,84 dl/g

Die polarisationsmikroskopische Untersuchung ergibt flüssigkristallines Verhalten bis zur Meßgrenze (385 °C).

## Ansprüche

1. Formmasse bestehend aus einem thermoplastisch verarbeitbaren, aromatischen Polyesterimid enthaltend die Reste nachstehender Ausgangsmonomeren:
A. 10 - 70 Mol.-% HO-Ar-COOH
B. 0 - 44 Mol.-% HOOC-Ar′-COOH
C. 15 - 45 Mol.-% HO-Ar″-OH
D. 1 - 45 Mol.-% einer Verbindung der allgemeinen Formel

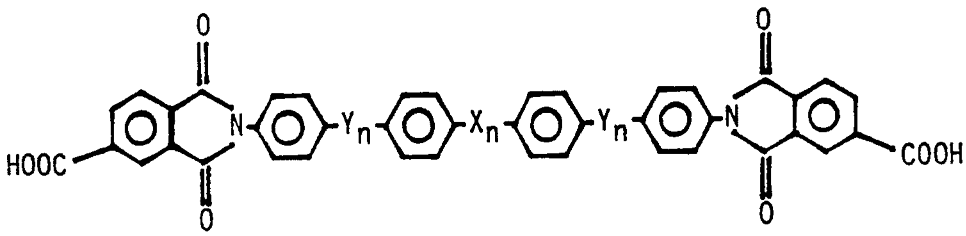

hierbei bedeutet
Ar, Ar′, Ar″: 1.3- oder 1.4-Phenylen; 1.4-, 1.5-, 2.6- oder 2.7-Naphthylen
oder

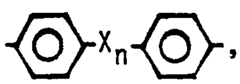

Ar, Ar′ und Ar″ können gleich oder ungleich sein;
Y:-O-; -S-;
X:-O-; -S-; $-SO_2-$; $-CR_2-$; -CO-;
R:-H, $C_1$ - $C_4$-Alkyl;
n:0 oder 1;
alle Mengenangaben beziehen sich auf die Summe von A. bis D., und sie müssen in der Summe 100 Mol.-% ergeben, wobei das molare Verhältnis (B. + D.) : C. im Bereich von 0,9 : 1 bis 1,1 : 1 liegt.

2. Formmasse gemäß Anspruch 1 mit der Bedeutung von
Ar: 1.4-Phenylen.

3. Formmasse gemäß Anspruch 1 und 2 mit der Bedeutung von
Ar′: 1.3- oder 1.4-Phenylen
oder ein Gemisch davon.

4. Formmasse gemäß den Ansprüchen 1 bis 3 mit der Bedeutung von
Ar″: 1.4-Phenylen oder 4.4′-Biphenylen
oder ein Gemisch davon.

5. Formmasse gemäß den Ansprüchen 1 bis 4, die ein Polyesterimid enthält, bei dem die Komponente D. zumindest 10 Mol.-% in der Summe der Komponenten B. und D. ausmacht.

6. Formmasse gemäß den Ansprüchen 1 bis 4, die ein Polyesterimid enthält, bei dem die Komponente D. zumindest 16 Mol.-% in der Summe der Komponenten B. und D. ausmacht.